# EUROPÄISCHE PATENTSCHRIFT

(11) **EP 0 950 464 B1**
(45) Veröffentlichungstag und Bekanntmachung des Hinweises auf die Patenterteilung: **03.09.2003**
(21) Anmeldenummer: 99105900.7
(22) Anmeldetag: 24.03.1999
(51) Int. Cl.: B23Q 1/00

(54) **Druckmittelzuführungseinrichtung**
Device for supplying fluid under pressure
Dispositif d'alimentation d'un fluide sous pression

(30) Priorität: 18.04.1998 DE 19817331
(43) Veröffentlichungstag der Anmeldung: 20.10.1999
(73) Patentinhaber: Hiestand, Karl, D-88630 Pfullendorf (DE)
(72) Erfinder: Hiestand, Karl, D-88630 Pfullendorf (DE)
(74) Vertreter: Engelhardt, Guido, Dipl.-Ing.

(56) Entgegenhaltungen:
- DE-A- 3 632 677
- DE-A- 4 404 547
- US-A- 5 269 345

## Beschreibung

Die Erfindung bezieht sich auf eine Einrichtung zur Zuführung von Druckmittel aus einem ortsfesten Bauteil in ein rotierendes Bauteil, gemäss dem Oberbegriff des Anspruchs 1. (Siche, z.B., DE-4 404 547-A).

Durch die DE 36 32 677 C2 ist ein umlaufender Hohlspannzylinder, der mit einer derartigen Druckmittelzuführungseinrichtung versehen ist, bekannt. Für jede Druckmittelzuführungsleitung ist hierbei zwischen zwei mit einem Distanzring verspannte Planscheiben ein Dichtring eingesetzt, der mit den Planscheiben die radialen Dichtspalte einschließt. Die einander zugekehrten Flächen der Planscheiben und des Dichtringes sind als ebene Flächen ausgebildet, so daß, sobald Druckveränderungen in einem der radialen Dichtspalte auftreten, der Dichtring in Richtung des anderen Dichtspaltes verschoben und gegen die benachbarte Planscheibe gepreßt wird. Ein hoher Verschleiß durch die dabei auftretenden Reibungskräfte ist in diesem Fall unerläßlich, die Standzeit dieser bekannten nur für gasförmige Druckmedien verwendbaren Druckmittelübertragungeinrichtung ist daher sehr gering.

Aufgabe der Erfindung ist es demnach, eine Druckmittelzuführungseinrichtung der eingangs genannten Gattung in der Weise auszubilden, daß eine Anlage der beiden an der Druckmittelübertragung beteiligten Bauteile aneinander unter Druck ausgeschlossen ist, so daß ein Verschleiß durch eine erhöhte Reibung nicht in Kauf genommen werden muß. Vielmehr soll erreicht werden, daß sich die beiden Bauteile zu einander einpendeln und stets eine Mittellage einnehmen, und zwar sowohl bei Stillstand als auch bei Rotation. Der Bauaufwand, mit dem dies zu bewerkstelligen ist, soll gering gehalten werden, dennoch soll über einen langen Zeitraum eine stets zufriedenstellende störungsfreie Betriebsweise gegeben sein.

Gemäß der Erfindung wird dies bei einer Einrichtung zur Zuführung von Druckmittel aus einem ortsfesten Bauteil in ein rotirendes Bauteil der vorgenannten Art dadurch erreicht, daß in die die radial gerichteten Dichtspalte begrenzenden Stimflächen des ortsfesten Bauteils und/oder des rotierenden Bauteils jeweils eine oder mehrere umlaufende Druckkammern eingearbeitet sind, die über einen oder mehrere radial gerichtete Regelschlitze mit der Ringnut zwischen dem ortsfesten Bauteil und dem rotierenden Bauteil verbunden sind, und daß die die radial gerichteten Dichtspalte begrenzenden mit den Druckkammern versehenen Stirnflächen des ortsfesten Bauteils und/oder des rotierenden Bauteils flächengleich zueinander ausgebildet sind.

Die die radial gerichteten Dichtspalte begrenzenden mit den Druckkammern versehenen Stirnflächen des ortsfesten Bauteils oder des rotierenden Bauteils können in bezug auf die Querachse des ortsfesten Bauteils spiegelbildlich flächengleich zueinander ausgebildet sein, es ist aber auch möglich, die dem einen radialen Dichtspalt zugeordneten Druckkammem und Regelschlitze in das ortsfeste Bauteil oder das rotierende Bauteil und die dem anderen radialen Dichtspalt zugeordneten Druckkammem und Regelschlitze in das rotierende Bauteil oder das ortsfeste Bauteil einzuarbeiten.

Zweckmäßig ist es hierbei, die einander zugekehrten Stirnflächen des ortsfesten Bauteils und/oder des rotierenden Bauteils jeweils mit einer flächengleichen Innendichtfläche, einer oder mehreren Druckkammern sowie einer flächengleichen Außendichtfläche zu versehen, wobei die an den Stirnflächen des ortsfesten Bauteils und/oder des rotierenden Bauteils vorgesehenen Innendichtflächen etwa doppelt so groß bemessen sein sollten wie die Außendichtflächen, und die in axialer Richtung beaufschlagten Flächen der Druckkammem größer zu bemessen sind als die Innendichtflächen der radialen Dichtspalte. Außerdem sollten die Druckkammern im Querschnitt rechteckig ausgebildet sein.

Bei zwei oder mehreren in das ortsfeste Bauteil und/oder das rotierende Bauteil eingearbeiteten Druckkammern ist es angebracht, diese jeweils über einen oder mehrere Regelschlitze mit der axial gerichteten Ringnut und untereinander zu verbinden.

Die den beiden radialen Dichtspalten zugeordneten Regelschlitze sollten jeweils eine gleich groß bemessene Querschnittsfläche aufweisen, auch ist es angezeigt, das ortsfeste Bauteil als ringförmige Scheibe auszubilden und in das rotierende Bauteil eingreifen zu lassen. Des weiteren kann jeder der radial gerichteten Dichtspalte durch eine vorzugsweise durch einen am ortsfesten Bauteil angeformten Steg gebildete Auffangkammern abgedeckt sein.

Wird eine Einrichtung zur Zuführung von Druckmittel aus einem ortsfesten Bauteil in ein rotierendes Bauteil gemäß der Erfindung ausgebildet, so ist die Gewähr gegeben, daß durch Reibung bedingte Beschädigungen an dem ortsfesten Bauteil und/oder dem rotierenden Bauteil im Bereich der radialen Dichtspalte nahezu ausgeschlossen sind. Die beiden Bauteile pendeln sich vielmehr, und zwar sowohl bei Stillstand als auch bei Rotation sowie bei einer schlagartigen Druckmittelzuführung stets in eine Mittellage ein, ein einseitiges Anpressen wird somit zuverlässig vermieden. Eine lange Lebensdauer ist demnach gewährleistet, zumal sich in den in ihrer Breite sich ständig verändernden radialen Dichtspalten und den im Leckölstrom angeordneten Regelschlitzen keine u. U. im Druckmittel mitgeführten Verunreinigungen ablagern können. Bei sehr einfacher konstruktiver Ausgestaltung ermöglicht die somit wirtschaftlich herzustellende vorschlagsgemäß ausgebildete Einrichtung eine betriebssichere und störungsfreie Übertragung eines auch unter hohem Druck stehenden Druckmittels und hohen Drehzahlen über einen langen Zeitraum.

In der Zeichnung ist ein Ausführungsbeispiel einer gemäß der Erfindung ausgebildeten Einrichtung zur Zuführung von Druckmittel aus einem ortsfesten Bauteil in ein rotierendes Bauteil dargestellt, das nachfolgend im einzelnen erläutert ist. Hierbei zeigt:
- Figur 1: die an einen Hohlspannzylinder angebaute Druckmittelzuführungseinrichtung, in einem axialen Schnitt,
- Figur 2: einen Schnitt nach der Linie II - II der Figur 1,
- Figur 3: die Druckmittelzuführungseinrichtung nach Figur 1 mit an dem ortsfesten Bauteil vorgesehenen Druckkammern, und
- Figur 4: die Druckmittelzuführungseinrichtung nach Figur 3 mit jeweils zwei konzentrisch ineinander angeordneten Druckkammern.

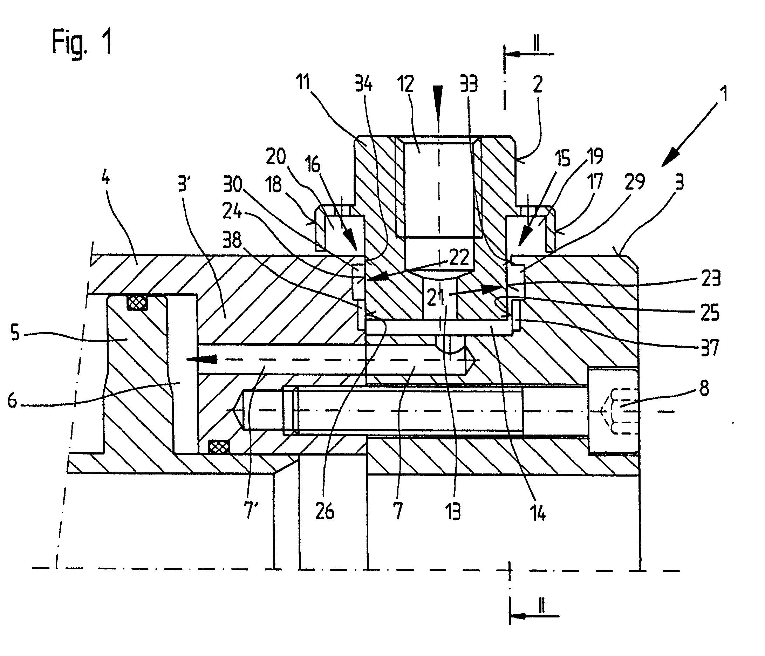

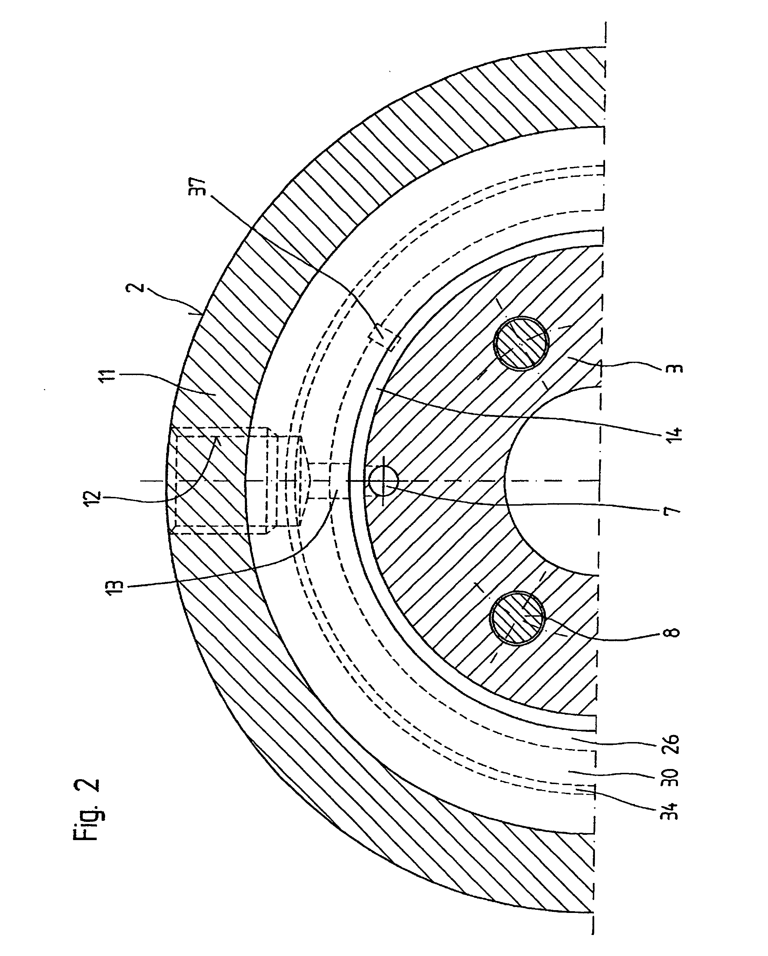

Die in den Figuren 1 bis 4 dargestellte und mit 1 bezeichnete Einrichtung dient zur Zuführung von Druckmittel, beispielsweise Drucköl, aus einem ortsfest angeordneten Bauteil 2 in ein zweiteiliges rotierendes Bauteil 3, 3' sowie einem an diesem mittels Schrauben 8 befestigten Hohlspannzylinder 4. In den Hohlspannzylinder 4, dessen Zylinderwand bei dem gezeigten Ausführungsbeispiel das Bauteil 3' bildet, ist ein von Druckmittel beaufschlagbarer Kolben 5 eingesetzt, dessen zugeordneter Druckraum 6 über in dem rotierenden Bauteil 3, 3' vorgesehene Kanäle 7, 7' zur Zuführung des Druckmittels an das ortsfeste Bauteil 2 angeschlossen ist.

Das als Scheibe 11 gestaltete ortsfeste Bauteil 2 greift mit radialem Abstand in das rotierende Bauteil 3, 3' ein, so daß zwischen diesen eine axial gerichtete Ringnut 14 sowie beiderseits des ortsfesten Bauteils 2 radiale Dichtspalte 15 und 16 gebildet sind. Außerdem ist die Scheibe 11 mit einem Anschluß 12 für eine nicht gezeigte Druckmittelzuführungsleitung und einen Kanal 13, der in die Ringnut 14 mündet, versehen. Und der in dem rotierenden Bauteil 3 eingearbeitete Kanal 7 ist an die Ringnut 14 angeschlossen, so daß das zugeführte Druckmittel über den Kanal 13, die Ringnut 14 sowie die Kanäle 7 und 7' in den Druckraum 6 des Hohlspannzylinders 4 gelangt.

Die die radialen Dichtspalte 15und 16 begrenzenden Stirnflächen 21 und 22 des rotierenden Bauteils 3, 3' sind, um eine Anlage an dem ortsfesten Bauteil 2 unter Druck auszuschließen, in besonderer Weise gestaltet, und zwar sind in die Stirnflächen 21 und 22 jeweils eine Druckkammer 29 bzw. 30 eingearbeitet, die über flächengleiche Regelschlitze 37 bzw. 38 mit der Ringnut 14 verbunden sind. Die Stirnflächen 21 und 22 weisen somit jeweils eine Innendichtfläche 25 bzw. 26, die Druckkammem 29 bzw. 30 sowie eine äußere Außendichtfläche 33 bzw. 34 auf. In bezug auf die Querachse der Scheibe 12 sind somit die Stirnflächen 21 und 22 spiegelbildlich flächengleich zueinander ausgebildet, wobei die inneren Innendichtflächen 25 und 26 etwa doppelt so groß bemessen sind wie die Außendichtflächen 33 und 34. Auch sind die in axialer Richtung beaufschlagten Flächen der im Querschnitt rechteckig gestalteten Druckkammem 29 und 30 größer bemessen als die Innendichtflächen 25 und 26. Dadurch wird ein kurzfristiges Einpendeln der beiden Bauteile zueinander ermöglicht.

Wird dem Hohlspannzylinder 4 über das ortsfeste Bauteil 2 und das rotierende Bauteil 3 Druckmittel zugeführt, so wird in dem Druckraum 6 und der Ringnut 14 ein statischer Druck aufgebaut. Eine Teilmenge des Druckmittels wird bei der in Figur 1 dargestellten Lage der beiden Bauteile 2 und 3 zueinander über den vergrößerten radialen Dichtspalt 15 in eine durch einen an der Scheibe 12 angeformten Steg 17 gebildeten Auffangkammer 19 abströmen. Da jedoch der gegenüberliegende radiale Dichtspalt 16 durch Anlage der Außendichtfläche 34 an der Scheibe 12 nahezu geschlossen ist, die Druckkammer 30 aber über den Regelschlitz 38 mit der Ringnut 14 verbunden ist, wird in dieser ein Druck aufgebaut und somit eine axial gerichtete Kraft auf die beiden Bauteile 2 und 3 ausgeübt. In Folge davon wird die Außendichtfläche 34 von der Scheibe 12 abgehoben, so daß Druckmittel in eine dem radialen Dichtspalt 16 zugeordnete ebenfalls durch einen angeformten Steg 18 gebildete Auffangkammer 20 gelangt und aus dieser wie auch aus der Auffangkammer 19 in den Druckmittelkreislauf zurückgeführt wird. Gleichzeitig wird der radiale Spalt 15 mehr oder weniger geschlossen, die beiden Bauteile 2 und 3 führen demnach bei einer Druckmittelzuführung mittels der Einrichtung 1 ständig Pendelbewegungen aus, und es stellen sich kurzfristig immer wieder Gleichgewichtszustände ein. Ein kontrolliertes Abströmen von Druckmittel über die radialen Dichtspalte 15 und 16 wird dabei in Kauf genommen, eine Anlage unter Druck der beiden Bauteile 2 und 3 aneinander, durch die an diesen Beschädigungen hervorgerufen werden können, wird durch das Einpendeln aber zuverlässig vermieden.

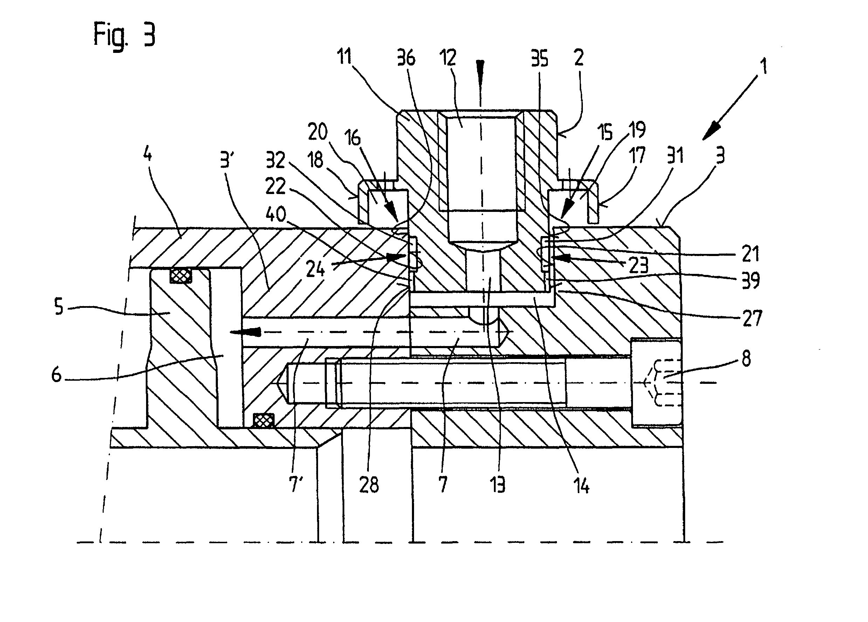

Bei der Ausführungsvariante nach Figur 3 sind in die Stirnflächen 23 und 24 des ortsfesten Bauteils 2 Druckkammern 31 und 32 eingearbeitet, die über Regelschlitze 39 und 40 an die Ringnut 14 angeschlossen sind. Die Innendichtflächen 27 und 28 sowie die Außendichtflächen 35 und 36 sind somit an der Scheibe 11 des ortsfesten Bauteils 2 vorgesehen, die Stirnflächen 21 und 22 des rotierenden Bauteils 3, 3' sind dagegen flächenplan gestaltet.

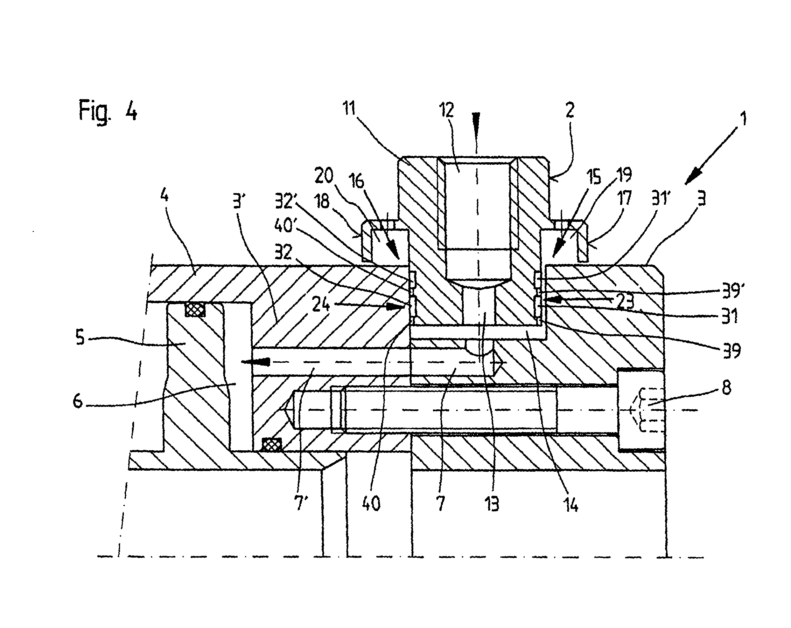

Des weiteren ist es möglich, auch zwei oder mehrere Druckkammern konzentrisch ineinander in einem der beiden Bauteile 2 oder 3 vorzusehen. Gemäß Figur 4 sind in die Scheibe 12 des feststehenden Bauteils 2 in die beiden Stirnflächen 23 und 24 jeweils zwei konzentrisch ineinander angeordnete Ringkammern 31 und 31' bzw. 32 und 32' eingearbeitet, die über Regelschlitze 39' bzw. 40' miteinander verbunden sind. Auch die äußeren Druckkammern 31' und 32' sind somit an die Ringnut 14 angeschlossen, so daß auch in diesen ein Druck aufgebaut werden kann. Und da bei allen Ausgestaltungen die mit Druckkammern 29, 30 bzw. 31, 32 bzw. 31, 31' bzw. 32, 32' versehenen Stirnflächen 21, 22 bzw. 23, 24 in bezug auf die Querachse der Scheibe 11 spiegelbildlich flächengleich zueinander gestaltet sind, ist eine Verschiebung eines der beiden Bauteile 2 oder 3 in eine Richtung ausgeschlossen, die Breite der radialen Spalte 15 und 16 wird sich vielmehr stets konstant einstellen.

## Patentansprüche

1. Einrichtung (1) zur Zuführung von Druckmittel aus einem ortsfesten Bauteil (2) in ein rotierendes Bauteil (3, 3'), insbesondere zur Zuführung von Druckmittel in einen Hohlspannzylinder 84) oder dgl., wobei zwischen dem ortsfesten Bauteil (2) und dem rotierenden Bauteil (3, 3') eine axial gerichtete Ringnut (14) sowie radial gerichtete Dichtspalte (15, 16) vorgesehen sind, und in die die radial gerichteten Dichtspalte (15, 16) begrenzenden Stirnflächen (21, 22 bzw. 23, 24) des ortsfesten Bauteils (2) und/oder des rotierenden Bauteils (3, 3') jeweils eine oder mehrere umlaufende Druckkammern (29, 30 bzw. 31, 32 bzw. 31, 31', 32, 32') eingearbeitet sind,
**dadurch gekennzeichnet,**
**daß** die über einen oder mehrere radial gerichtete Regelschlitze (37, 38 bzw. 39, 40 bzw. 39, 39', 40, 40') mit der Ringnut (14) zwischen dem ortsfesten Bauteil (2) und dem rotierenden Bauteil (3, 3') verbunden sind, und daß die die radial gerichteten Dichtspalte (15, 16) begrenzenden mit den Druckkammem (29, 30 bzw. 31, 32 bzw. 31, 31', 32, 32') versehene Stirnflächen (21, 22 bzw. 23, 24) des ortsfesten Bauteils (2) und/oder des rotierenden Bauteils (3, 3') flächengleich zueinander ausgebildet sind.

2. Einrichtung nach Anspruch 1,
**dadurch gekennzeichnet,**
**daß** die die radial gerichteten Dichtspalte (15, 16) begrenzenden mit den Druckkammern (29, 30 bzw. 31, 32 bzw. 31, 31', 32, 32') versehenen Stirnflächen (21, 22 bzw. 23, 24) des ortsfesten Bauteils (2) oder des rotierenden Bauteils (3) in bezug auf die Querachse des ortsfesten Bauteils (2) spiegelbildlich flächengleich zueinander ausgebildet sind.

3. Einrichtung nach Anspruch 2,
**dadurch gekennzeichnet,**
**daß** die dem einen radialen Dichtspalt (15) zugeordneten Druckkammern (29) und Regelschlitze (37) in das ortsfeste Bauteil (2) oder das rotierende Bauteil (3) und die dem anderen radialen Dichtspalt (16) zugeordneten Druckkammern (32) und Regelschlitze (40) in das rotierende Bauteil (3) oder das ortsfeste Bauteil (2) eingearbeitet sind.

4. Einrichtung nach einem der Ansprüche 1 bis 3,
**dadurch gekennzeichnet,**
**daß** die einander zugekehrten Stirnflächen (21, 22 bzw. 23, 24) des ortsfesten Bauteils (2) und/oder des rotierenden Bauteils (3, 3') jeweils mit einer flächengleichen Innendichtfläche (25, 26 bzw. 27, 28), einer oder mehreren Druckkammern (29, 30 bzw. 31, 32 bzw. 31, 31', 32, 32') sowie einer flächengleichen Außendichtfläche (33, 34 bzw. 35, 36) versehen sind.

5. Einrichtung nach Anspruch 4,
**dadurch gekennzeichnet,**
**daß** die an den Stirnflächen (21, 22 bzw. 23, 24) des ortsfesten Bauteils (2) und/oder des rotierenden Bauteils (3, 3') vorgesehenen Innendichtflächen (25, 26 bzw. 27, 28) etwa doppelt so groß bemessen sind wie die Außendichtflächen (33, 34 bzw. 35, 36).

6. Einrichtung nach Anspruch 4 oder 5,
**dadurch gekennzeichnet,**
**daß** die in axialer Richtung beaufschlagten Flächen der Druckkammern (29, 30 bzw. 31, 32) größer bemessen sind als die Innendichtflächen (25, 26 bzw. 27, 28) der radialen Dichtspalte (15, 16).

7. Einrichtung nach einem der Ansprüche 4 bis 6,
**dadurch gekennzeichnet,**
**daß** die Druckkammern (29, 30 bzw. 31, 32) im Querschnitt rechteckig ausgebildet sind.

8. Einrichtung nach einem der Ansprüche 4 bis 7,
**dadurch gekennzeichnet,**
**daß** bei zwei oder mehreren in das ortsfeste Bauteil (2) und/oder das rotierende Bauteil (3, 3') eingearbeitete Druckkammern (31, 31' bzw. 32, 32') diese jeweils über einen oder mehrere Regelschlitze (39, 39' bzw, 40, 40') mit der axial gerichteten Ringnut (14) und untereinander verbunden sind.

9. Einrichtung nach eiriem der Ansprüche 4 bis 8,
**dadurch gekennzeichnet**
**daß** die den beiden radialen Dichtspalten (15, 16) zugeordneten Regelschlitze (37, 38 bzw. 39, 40) jeweils eine gleich groß bemessene Querschnittsfläche aufweisen.

10. Einrichtung nach einem der Ansprüche 1 bis 9,
**dadurch gekennzeichnet,**
**daß** das ortsfeste Bauteil (2) als ringförmige Scheibe (11) ausgebildet ist und in das rotierende Bauteil (3) eingreift.

11. Einrichtung nach einem der Ansprüche 1 bis 10,
**dadurch gekennzeichnet,**
**daß** jeder der radial gerichteten Dichtspalte (15, 16) durch eine vorzugsweise durch einen am ortsfesten Bauteil (2) angeformten Steg (17, 18) gebildete Auffangkammer (19, 20) abgedeckt ist.

## Claims

1. A device (1) for supplying fluid under pressure from a stationary component (2) into a rotating component (3, 3'), in particular for supplying fluid under pressure into a hollow clamping cylinder (4) or the like, in which an axially directed annular groove (14) and a radially directed sealing gap (15, 16) are provided between the stationary component (2) and the rotating component (3, 3') and in which one or more circumferential pressure chambers (29, 30 or 31, 32 or 31, 31', 32, 32') each are worked into the end surfaces (21, 22 or 23, 24) of the stationary component (2) and/or of the rotating component (3, 3') which limit the radially directed sealing gap (15, 16),
**characterised in that**,
the pressure chambers (29, 30 or 31, 32 or 31, 31', 32, 32') are connected to the annular groove (14) between the stationary component (2) and the rotating component (3, 3') by means of one or more radially directed control slots (37, 38 or 39, 40 or 39, 39', 40, 40'), and that the end surfaces (21, 22 or 23, 24) of the stationary component (2) and/or of the rotating component (3, 3') which limit the radially directed sealing gap (15, 16) and are provided with the pressure chambers (29, 30 or 31, 32 or 31, 31', 32, 32') are formed with equal surface areas.

2. The device in accordance with Claim 1,
**characterised in that**,
the end surfaces (21, 22 or 23, 24) of the stationary component (2) or of the rotating component (3) which limit the radially directed sealing gap (15, 16) and are provided with the pressure chambers (29, 30 or 31, 32 or 31, 31', 32, 32') are formed with equal surface areas in a mirror image of one another.

3. The device in accordance with Claim 2,
**characterised in that**,
the pressure chambers (29) and control slots (37) which are assigned to the one radial sealing gap (15) are worked into the stationary component (2) or the rotating component (3) and the pressure chambers (32) and control slots- (40) which are assigned to the other radial sealing gap (16) are worked into the rotating component (3) or the stationary component (2).

4. The device in accordance with one of Claims 1 to 3,
**characterised in that**,
the end surfaces (21, 22 or 23, 24) of the stationary component (2) and/or of the rotating component (3, 3') which face one another are each provided with an internal sealing surface (25, 26 or 27, 28) having the same surface area, with one or more pressure chambers (29, 30 or 31, 32 or 31, 31', 32, 32') and with an external sealing surface (33, 34 or 35, 36) having the same surface area.

5. The device in accordance with Claim 4,
**characterised in that**,
the internal sealing surfaces (25, 26 or 27, 28) provided on the end surfaces (21, 22 or 23, 24) of the stationary component (2) and/or of the rotating component (3, 3') are approximately twice as large as the external sealing surfaces (33, 34 or 35, 36).

6. The device in accordance with Claim 4 or 5,
**characterised in that**,
the surfaces of the pressure chambers (29, 30 or 31, 32) which are subject to pressure in an axial direction are larger than the internal sealing surfaces (25, 26 or 27, 28) of the radial sealing gap (15, 16).

7. The device in accordance with one of Claims 4 to 6,
**characterised in that**,
- the pressure chambers (29, 30 or 31, 32) have a rectangular cross-section.

8. The device in accordance with one of Claims 4 to 7,
**characterised in that**,
when two or more pressure chambers (31, 31' or 32, 32') are worked into the stationary component (2) and/or the rotating component (3, 3'), each of them are connected to the axially directed annular groove (14) via one or more control slots (39, 39' or 40, 40') and are interconnected.

9. The device in accordance with one of Claims 4 to 8,
**characterised in that**,
the control slots (37, 38 or 39, 40) assigned to the two radial sealing gaps (15, 16) each have the same sized cross-sectional area.

10. The device in accordance with one of Claims 1 to 9,
**characterised in that**,
the stationary component (2) is formed as an annular disc (11) and engages in the rotating component (3).

11. The device in accordance with one of Claims 1 to 10,
**characterised in that**,
each of the radially directed sealing gaps (15, 16) is covered by a collecting chamber (19, 20), which in a preferred embodiment is formed by a web (17, 18) formed onto the stationary component (2).

## Revendications

1. Dispositif (1) d'alimentation d'un fluide sous pression provenant d'un composant stationnaire (2) vers un composant rotatif (3, 3'), en particulier pour l'alimentation d'un fluide sous pression vers un cylindre de serrage creux (4) ou vers un composant similaire, avec, entre le composant stationnaire (2) et le composant rotatif (3, 3'), une gorge annulaire axiale (14) ainsi qu'une fente d'étoupage radiale (15, 16) et avec une ou plusieurs chambres de pression circulaires (29, 30 ou 31, 32 ou 31, 31', 32, 32') dans les faces frontales (21, 22 ou 23, 24) du composant stationnaire (2) et/ou du composant rotatif (3, 3') limitant les fentes d'étoupage radiales (15, 16),
**caractérisé en ce que**
les chambres de pression circulaires (29, 30 ou 31, 32 ou 31, 31', 32, 32') communiquent par l'intermédiaire d'une ou de plusieurs fentes de réglage radiales (37, 38 ou 39, 40 ou 39, 39', 40, 40') avec la gorge annulaire (14) entre le composant stationnaire (2) et le composant rotatif (3, 3') et que les faces frontales (21, 22 ou 23, 24) du composant stationnaire (2) et/ou du composant rotatif (3, 3') limitant la fente d'étoupage radiale (15, 16) et comportant les chambres de pression (29, 30 ou 31, 32 ou 31, 31', 32, 32') sont conçues avec des surfaces égales l'une par rapport à l'autre.

2. Dispositif d'après la revendication 1,
**caractérisé en ce que**,
référées à l'axe transversale du composant stationnaire (2), les faces frontales (21, 22 ou 23, 24) du composant stationnaire (2) ou du composant rotatif (3), limitant la fente d'étoupage radiale (15, 16) et comportant les chambres de pression (29, 30 ou 31, 32 ou 31, 31', 32, 32') sont conçues avec des surfaces inversées égales l'une par rapport à l'autre.

3. Dispositif d'après la revendication 2,
**caractérisé en ce que**
les chambres de pression (29) et les fentes de réglage (37) assignées à l'une des fentes d'étoupage radiales (15) sont pratiquées dans le composant stationnaire (2) ou dans le composant rotatif (3), et que les chambres de pression (32) et les fentes de réglage (40) assignées à la fente d'étoupage radiale (16) sont pratiquées dans le composant rotatif (3) ou dans le composant stationnaire (2).

4. Dispositif d'après une des revendications 1 à 3,
**caractérisé en ce que**
les faces frontales (21, 22 ou 23, 24) orientées l'une vers l'autre du composant stationnaire (2) et/ou du composant rotatif (3, 3') sont munies respectivement d'une surface d'étoupage intérieure à géométrie égale (25, 26 ou 27, 28), d'une ou de plusieurs chambres de pression (29, 30 ou 31, 32 ou 31, 31', 32, 32') ainsi que d'une surface d'étoupage extérieure à géométrie égale (33, 34 ou 35, 36).

5. Dispositif d'après la revendication 4,
**caractérisé en ce que**
les surfaces d'étoupage intérieures (25, 26 ou 27, 28) prévues sur les faces frontales (21, 22 ou 23, 24) du composant stationnaire (2) et/ou du composant rotatif (3, 3') sont dimensionnées à peu près deux fois plus grandes que les surfaces d'étoupage extérieures (33, 34 ou 35, 36).

6. Dispositif d'après la revendication 4 ou 5,
**caractérisé en ce que**
les surfaces, soumises à l'action axiale, des chambres de pression (29, 30 ou 31, 32) sont dimensionnées plus grandes que les surfaces d'étoupage intérieures (25, 26 ou 27, 28) de la fente d'étoupage radiale (15, 16).

7. Dispositif d'après une des revendications 4 à 6,
**caractérisé en ce que**
les chambres de pression (29, 30 ou 31, 32) ont une section rectangulaire.

8. Dispositif d'après une des revendications 4 à 7,
**caractérisé en ce que**
dans le cas de deux ou de plusieurs chambres de pression (31, 31' ou 32, 32') pratiquées dans le composant stationnaire (2) et/ou dans le composant rotatif (3, 3'), ces chambres communiquent par l'intermédiaire d'une ou-de plusieurs fentes de réglage radiales (39, 39 ou, 40, 40') avec la gorge annulaire axiale (14) ou avec les autres chambres.

9. Dispositif d'après une des revendications 4 à 8,
**caractérisé en ce que**
les fentes de réglage (37, 38 ou, 39, 40) assignées aux deux fentes d'étoupage radiales (15, 16) comportent respectivement une surface à section à peu près identique.

10. Dispositif d'après une des revendications 1 à 9,
**caractérisé en ce que**
le composant stationnaire (2) est conçu sous la forme d'un disque annulaire (11) s'engrènant dans le composant rotatif (3).

11. Dispositif d'après une des revendications 1 à 10,
**caractérisé en ce que**
chacune des fentes d'étoupage radiales (15, 16) est recouverte par une chambre de récupération (19, 20) formée de préférence par une nervure (17, 18) prévue sur le composant stationnaire (2).
